Europäisches Patentamt

European Patent Office

Office européen des brevets

(19)

(11) Veröffentlichungsnummer: **0 219 059 B1**

(12) **EUROPÄISCHE PATENTSCHRIFT**

(45) Veröffentlichungstag der Patentschrift: 15.05.91

(51) Int. Cl.⁵: **H05K 3/34, B23K 3/06**

(21) Anmeldenummer: 86113977.2

(22) Anmeldetag: 08.10.86

(54) **Vorrichtung zum Heissverzinnen von Leiterplatten und Verfahren zum Verlöten der Anschlüsse von Bauteilen mit den Leiterbahnen und Lötaugen einer Leiterplatte.**

(30) Priorität: 11.10.85 DE 3536304
08.11.85 DE 3539585
23.12.85 DE 3545933

(43) Veröffentlichungstag der Anmeldung:
22.04.87 Patentblatt 87/17

(45) Bekanntmachung des Hinweises auf die
Patenterteilung:
15.05.91 Patentblatt 91/20

(84) Benannte Vertragsstaaten:
AT BE CH DE ES FR GB GR IT LI LU NL SE

(56) Entgegenhaltungen:
US-A- 2 821 959     US-A- 3 989 180
US-A- 4 162 034     US-A- 4 171 761
US-A- 4 363 434     US-A- 4 437 605

(73) Patentinhaber: **Eidenberg, Kaspar**
**Barbarastrasse 18**
**W-5241 Gebhardshain(DE)**

(72) Erfinder: **Eidenberg, Kaspar**
**Barbarastrasse 18**
**W-5241 Gebhardshain(DE)**

(74) Vertreter: **Berkenfeld, Helmut, Dipl.-Ing.**
**An der Schanz 2**
**W-5000 Köln 60(DE)**

## Beschreibung

Die Erfindung betrifft eine Vorrichtung zum kontinuierlichen Heißverzinnen von Leiterplatten mit einer Station zum Heizen, einer Station zum Fluxen, einer Station zum Heißverzinnen, einer Station zum Reinigen und einer Station zum Trocknen der Leiterplatten, mit unter- und oberhalb von deren Transportbahn horizontal angeordneten und die Leiterplatten erfassenden Transportwalzen, mit einer Wanne an der Station zum Heißverzinnen zur Aufnahme des schmelzflüssigen Zinns, mit mindestens einer Düse zum Aufbringen des Zinns auf die Kupferleiterbahnen, mit einer Leitung zwischen der Wanne und der Düse, wobei die Leitung über die Ebene der Düse nach oben hinausgeht, mit einer Pumpe zum Fördern des Zinns aus der Wanne durch die Leitung in die Düse und mit Heizvorrichtungen für das Zinn in der Wanne. Die Erfindung betrifft weiter ein Verfahren zum Verlöten der Anschlüsse von Bauteilen mit den Leiterbahnen und Lötaugen von auf einer oder auf beiden Seiten mit den Bauteilen bestückten Leiterplatten, wozu Lot in einer Wanne geschmolzen, die Leiterplatten über die Wanne geführt und das flüssige Lot dabei mit der Unterseite der Leiterplatten unter Verlöten der Anschlüsse in Berührung gebracht wird, unter Verwendung einer Vorrichtung der eben genannten Gattung.

Bei der Herstellung von Leiterplatten ist man von galvanischen Verfahren auf die Heißverzinnung übergegangen. Hierbei werden die bereite auf ein isolierendes Basismaterial aufgebrachten Kupfer-Leiterbahnen mit einer eutektischen Bleizinnschicht überzogen. Zur Vereinfachung wird im folgenden lediglich von einer Zinnschicht und einem Verzinnen gesprochen.

Zur Heißverzinnung kennt der Stand der Technik ein vertikal arbeitendes Taktverfahren und ein horizontal arbeitendes Durchlaufverfahren. Beim vertikal arbeitenden Taktverfahren werden die Leiterplatten in flüssiges Zinn getaucht. Beim Herausziehen werden sie zwischen Düsen durchgeführt und mit Heißluft abgeblasen. Dadurch werden die Bohrungen freigeblasen und das aufgebrachte Zinn eingeebnet. Beim horizontalen Durchlaufverfahren wird die Leiterplatte durch eine stehende Lot- oder Zinnwelle geführt. Diese entsteht vor den Leitblechen einer Düse, aus der schmelzflüssiges Zinn herausgetrieben wird. Anschließend wird die Leiterplatte wieder zwischen zwei Düsen durchgeführt und mit Heißluft abgeblasen.

Vor dem Verzinnen wird die Leiterplatte mit einem Flußmittel behandelt. Ein Teil des Flußmittels bleibt auf der Leiterplatte haften und wird damit in das Zinn hineingetragen. In dem heißen Zinn verbrennt das Flußmittel. In einem ruhigen Zinnbad schwimmen die Rückstände aus verbranntem Flußmittel auf der Zinnoberfläche auf. Infolge der ständigen Bewegung werden sie jedoch mitgenommen. Sie verschmutzen die Oberfläche der Leiterplatte. Weiter setzen sie Leitungen, Kanäle und die Pumpen zu. Schließlich beanspruchen sie die Oberflächen der Transportwalzen, so daß diese schnell verschleißen. Während jeder Schicht ergeben sich damit umfangreiche Reinigungs- und Wartungsarbeiten. Wie ausgeführt, werden die Leiterplatten nach dem Heißverzinnen mit Heißluft abgeblasen. Das Aufheizen dieser Luft verschlingt viel Wärmeenergie und damit Kosten.

Eine Vorrichtung der eingangs genannten Gattung, mit der jedoch Bauelemente an eine Leiterplatte angelötet werden, ist bekannt (US-PS 2 821 959). Der Erfindung liegt nun die Aufgabe zugrunde, eine Vorrichtung zum Heißverzinnen von Leiterplattenso auszubilden, daß das aufzutragende Zinn frei von Verunreinigungen durch verbrannte Flußmittelrückstände ist, daß der Aufwand für Wartung und Reinigung sinkt und daß die Energiekosten niedrig liegen. Der Erfindung liegt weiter die Aufgabe zugrunde, diese Vorrichtung so auszugestalten und anzuwenden, daß mit ihr die Anschlüsse von Bauteilen mit den Leiterbahnen und Lötaugen einer Leiterplatte verlötet werden können. Ausgehend von einer Vorrichtung der eingangs genannten Gattung ergibt sich die Lösung für diese Aufgabe nach der Erfindung dadurch, daß Säulen auf beiden Seiten der Transportbahn in der Wanne angeordnet sind, mit ihren unteren offenen Enden tief in diese eintauchen und mit ihren oberen Enden oberhalb der Transportbahn der Leiterplatten liegen, Düsen oberhalb und unterhalb der Transportbahn beidseits dieser angeordnet, auf diese ausgerichtet und mit ihren Einläufen in der Ebene der Transportbahn mit den Säulen verbunden sind. Beim kontinuierlichen Umpumpen des schmelzflüssigen Zinns beruhigt sich dieses in der Wanne. Dies führt dazu, daß verbrannte Flußmittelrückstände und andere Verunreinigungen wegen ihres niedrigen spezifischen Gewichtes in dem Schmelzbad nach oben steigen und sich auf dessen Oberfläche ansammeln. Von dort fließen sie ohne äußeres Zutun durch einen Überlauf ab. Zur weiteren und sichereren Trennung von Zinn und Verunreinigungen wird das Zinn von einer tiefen Stelle der Wanne abgenommen und von dort bis über die Ebene der Transportbahn hinaus nach oben hochgepumpt. Von dort strömt es allein durch statischen Druck ober Schwerkraft nach unten zu den Auftragsvorrichtungen. Dadurch ergibt sich ein sehr gleichförmiger Auftrag des Zinns auf die Kupferleiterbahnen. Ein statischer Druck entsprechend einem Höhenunterschied von etwa 600 mm hat sich als ausreichend herausgestellt. Die Säulen liegen in dem Kreislauf des schmelzflüssigen Zinns. In ihnen wird das Zinn hochgepumpt. Gleichzeitig bilden die Säulen Träger zum Befestigen anderer Bauteile der Vorrichtung. In die Düsen tritt das schmelzflüssige Zinn mit dem genannten statischen Druck ein und tritt aus ihnen gleichförmig aus. Der im oberen Bereich der Wanne vorgesehene Überlauf sorgt für ein Abströmender auf dem Schmelzbad aufschwimmenden verbrennten Flußmittelreste und anderer Verunreinigungen. Damit werden diese aus dem Kreislauf des Zinns entfernt. Unterschiedlich zum Stand der Technik können sie daher feine Kanäle und Düsen nicht mehr zusetzen. Ebenso sinkt der Abrieb an den Transportwalzen. Ebenso entfallen natürlich auch durch solche Verunreinigungen hervorgerufene Fehlerstellen in dem Zinnauftrag.

In einer zweckmäßigen Ausgestaltung ist vorgesehen, daß die Düsen als über die gesamte Breite der Transportbahn verlaufende Düsenstäbe ausgebildet sind, die Düsenstäbe zentrisch ein Rohr und dieses umschließend einen Ringraum aufweisen, die Säulen zwei sich konzentrisch umschließende Rohre aufweisen, die inneren Rohre mit ihren unteren Enden offen sind, in die Wanne eintauchen und die Ringräume an sie angeschlossen sind, während der Raum zwischen den beiden Rohren mit einem Einlaufende an eine Heißölquelle angeschlossen und andererseits mit den zentrischen Rohren verbunden ist. Zusätzlich zu dem Zinnkreislauf ist damit erfindungsgemäß auch ein Heißölkreislauf vorgesehen. Dieses Heißöl umströmt die Säulen und läuft auch durch die Düsenstäbe durch. Damit wird sichergestellt, daß das Zinn während seines gesamten Kreislaufes und insbesondere über der gesamten Länge der Düsenstäbe auf Solltemperatur gehalten wird.

In einer weiteren zweckmäßigen Ausgestaltung ist vorgesehen, daß die Düsen in der Bewegungsrichtung der Leiterplatten abwärts der Austrittsöffnungen für das Zinn Austrittsöffnungen für Heißluft aufweisen. Diese Heißluft wird auf etwa der gleichen Temperatur wie das Zinn gehalten. Beim Auftreffen der aus den Austrittsöffnungen austretenden Heißluftstrahlen auf die gerade aufgebrachte Zinnschicht wird diese vergleichmäßigt. Erfindungsgemäß tritt die Heißluft aus den gleichen Düsenstäben wie das Zinn aus. Innerhalb der Vorrichtung wird die Luft in der Nähe des Zinn- und des Heißölkreislaufes zugeführt. Hierbei erwärmt sie sich auf Solltemperatur. Damit erübrigt sich eine besondere Erwärmung der Luft, und Energiekostenwerden gespart.

In einer konstruktiven Ausgestaltung ist vorgesehen, daß die Düsen in den Zuleitungen zu den Austrittsöffnungen für das Zinn einen Schieber aufweisen, dieser durch den Druck einer Feder in die Zuleitung in eine diese verschließende Stellung und über einen Magneten aus dieser heraus in eine diese freigebende Stellung verschiebbar ist. Die Konstruktion ist damit so ausgelegt, daß die Austrittsöffnungen für das Zinn in Ruhestellung verschlossen sind. Mit Elektromagneten werden die Schieber in eine Offenstellung gezogen und die Austrittsöffnungen freigegeben.

In einer weiteren konstruktiven Ausgestaltung ist vorgesehen, daß die Düsen zwei Halbschalen aufweisen, die Halbschalen durch Bolzen zusammengehalten sind und auf ihren sich gegenüberliegenden Seiten zur Ausbildung der Ringräume ausgespart sind. Zweckmäßig sind die Düsen um ihre Längsachsen bzw. gegenüber der Transportbahn der Leiterplatten verstellbar. Damit läßt sich die Vorrichtung an unterschiedliche Arbeitsbedingungen anpassen.

In einer weiteren Ausgestaltung ist vorgesehen, daß die Düsen über ihrer Länge in mehrere Abschnitte unterteilt sind. Vorteilhaft sind die Düsen in einen mittleren breiten Bereich und zwei äußere schmale Bereiche unterteilt und die Schieber zum Steuern der Zufuhr des Zinns und die Steuerungen für die Heißluft für jeden Bereich getrennt betätigbar. Für den mittleren breiten Bereich empfiehlt sich eine Breite von 300 mm. Für die beiden äußeren schmalen Bereiche empfehlen sich Breiten von je 150 mm. Damit lassen sich Leiterplatten verschiedener Normbreiten allein oder gleichzeitig durch die erfindungsgemäße Vorrichtung durchführen.

Es wurde bereits ausgeführt, daß die Transportwalzen mechanisch stark beansprucht werden. Zusätzlich werden sie durch Berührung mit den heißen Leiterplatten auch thermisch stark beansprucht. Beim Stand der Technik hat man versucht, diese Beanspruchungen durch Wahl bestimmter Kunststoffe für die Oberfläche der Transportwalzen aufzufangen. Erfindungsgemäß werden die Transportwalzen mechanisch weniger beansprucht, da, wie ausgeführt, Verunreinigungen abgesondert werden. Zum Herabsetzen der thermischen Beanspruchung ist erfindungsgemäß vorgesehen, daß die Transportwalzen zum Transport der Leiterplatten Hohlwellen aufweisen und diese in einem Kühlmittelkreislauf liegen.

Versuche haben gezeigt, daß die Leiterplatten zweckmäßig nicht genau horizontal durch die Vorrichtung durchgeführt werden. Eine geringe Neigung oder ein Gefälle von zum Beispiel 3° gegenüber der Horizontalen in jeder Richtung sind zweckmäßig. Dann strömen in dem schmelzflüssigen Zinn noch verbliebene und mit diesem auf die Leiterplatten aufgebrachte Verunreinigungen in eine Ecke der Leiterplatte ab. Zum Erreichen dieser Neigung der Leiterplatten ist erfindungsgemäß vorgesehen, daß die Transportwalzen, die Düsen usw. in ihrer Neigung quer zur Transportbahn der Leiterplatten verstellbar sind. Ebenso ist vorgesehen, daß die Transportwalzen entlang der Transportbahn der Leiterplatten unter einer geringen Neigung angeordnet sind.

In einer konstruktiven Ausgestaltung empfiehlt sich, daß die Säulen in der Wanne und die Düsen zwischen den Säulen gehalten sind, unterhalb der Düsen ein ein Gefälle aufweisender Boden angeordnet ist und von dessen tiefster Stelle ein Ablaufrohr in die Wanne führt und der Raum oberhalb der Transportbahn und die Wanne jeweils durch Deckelplatten abgedeckt sind. Zweckmäßig ist der Boden trichterförmig und weist seine tiefste Stelle in der Mitte auf.

Zum Hochfördern des schmelzflüssigen Zinns in die Säulen und zum Umwälzen des Zinns in dessen Kreislauf ist in einer weiteren Ausgestaltung vorgesehen, daß auf jeder Säule ein Elektromotor angeordnet und in jeder Säule eine Welle gelagert ist, das obere Ende jeder Welle an einen Elektromotor angekuppelt und am unteren Ende jeder Welle ein Pumpenrad befestigt ist.

Zum Ausgleich des durch das Auftragen auf die Leiterplatten aus dem Kreislauf herausgenommenen Zinns ist in einer zweckmäßigen Ausgestaltung vorgesehen, daß ein Zinnknüppel, auch Anode, höhenverschiebbar aufgehangen ist und mit seinem unteren Ende in die Wanne eintaucht. Durch Berührung mit dem schmelzflüssigen Zinn schmilzt der Zinnknüppel an seinem unteren Ende ab. Der Stand des Zinnbades in der Wanne wird mit Fühlern gemessen. Bei einem Absinken des Standes unter den Sollwert wird der Zinnknüppel um ein bestimmtes Maß abgesenkt. Damit taucht er wieder in das schmelzflüssige Bad ein, schmilzt ab und erhöht den Stand auf dessen Sollwert.

Beim Stand der Technik werden die Leiterplatten nach dem Heißverzinnen in einer Reinigungsstation mit Druckluft abgeblasen. Die hierzu verwendeten Einrichtungen nennt man Luftmesser. Mit der Druckluft soll insbesondere das in die Bohrungen und Löcher eingedrungene Zinn, solange es noch heiß und damit weich ist, aus diesen herausgedrückt werden. Zum Erhöhen der Reinigungswirkung ist erfindungsgemäß vorgesehen, daß in der Station zum Reinigen der Leiterplatten die Transportwalzen federnd aufgehangen und an eine Rüttelvorrichtung angeschlossen sind. Dabei ist die Rüttelvorrichtung in Federn gelagert und die Transportwalzen sind in ihr gehalten. Durch das Rütteln der Leiterplatten wird das Herauslösen des Zinns aus den Bohrungen und Löchern unterstützt.

Auch beim Aufbringen des Flußmittels auf die Leiterplatten vor deren Heißverzinnung tritt die Schwierigkeit auf, daß das Flußmittel nicht nur die Wände der Bohrungen und Löcher benetzt, sondern in diesen verbleibt. Dies führt zu dem schon erwähnten unerwünschten Einbringen des Flußmittels in das Zinnbad. Zum Vermeiden dieser unerwünschten Flußmittelmitnahme ist in einer weiteren Ausgestaltung vorgesehen, daß in der Station zum Fluxen nach den Auftragsvorrichtungen für das Flußmittel oberhalb und unterhalb der Transportbahn der Leiterplatten auf diese ausgerichtete Düsen zum Freiblasen von deren Löchern vorgesehen sind. Als Düsen können die gleichen Düsen verwendet werden, mit denen das heiße Zinn aufgebracht wird. Durch deren eine Austrittsöffnung wird das Flußmittel und durch deren andere Austrittsöffnung, wie beim Auftragen des Zinns, Luft auf die Leiterplatten aufgegeben. Dabei können sowohl das Flußmittel als auch die Luft mit Heißöl erwärmt werden.

Durch die Düsen wird das Zinn im allgemeinen nicht in gleichmäßiger Schichtdicke auf die Leiterplatten aufgetragen. Es entstehen Verdickungen, erhabene Stellen und so weiter. Der Zinnauftrag muß vergleichmäßigt oder nivelliert werden. Bei einem bekannten Verfahren werden die Leiterplatten dazu durch eine Welle heißen Öls durchgeführt. Dieses wird unter Druck durch eine aus Leitblechen gebildete Düse ausgepreßt. Dadurch entstehen insbesondere dann, wenn gerade keine Leiterplatte vorbeiläuft, Ölschwaden. Diese lassen sich kaum zurückhalten und drängen in die Umgebung ein. Zum Nivellieren des Zinnauftrages ohne eine solche Belastung der Umwelt und bei gleichzeitiger Rückführung des Öls sieht die Erfindung in einer weiteren Ausgestaltung vor, daß in der Bewegungsrichtung der Leiterplatten nach den Düsen zum Aufbringen des Zinns ober- und unterhalb der Transportbahn Düsen zum Aufspritzen von heißem Öl und Düsen zum Aufblasen von eine niedrigere Temperatur aufweisender Luft vorgesehen sind. Durch die Düsen wird Öl mit einer Temperatur im Bereich von 220° in einem begrenzten Strahl auf die Leiterplatten aufgespritzt. Der Druck ist wesentlich höher als in einer Ölwelle. Dadurch wird der Zinnauftrag bei geringem Ölvolumen nivelliert. Dies erfolgt gleichmäßig auf Ober- und Unterseite der Leiterplatte. Durch die anschließend mit einer niedrigeren Temperatur aufgeblasene Luft wird das Zinn abgekühlt und zum Erstarren gebracht. Die die Leiterplatte anschließend erfassenden Transportwalzen drücken dann keine Riefen und dergleichen in den Zinnauftrag ein. Statt der kühleren Luft kann auch kühleres Öl aufgeblasen werden.

Zweckmäßig sind die Düsen in der Rüttelvorrichtung angeordnet. Dabei sollten sie intermittierend nur bei Durchlauf einer Leiterplatte mit Öl und/oder Luft gespeist werden. Dadurch wird verhindert, daß Öl unnötig austritt und die Umgebung belastet. Statt je eines Paares Düsen zum Austritt von Öl und Luft können auch jeweils mehr als ein Paar Düsen vorgesehen werden.

Erwähnt sei noch, daß in der Station zum Fluxen die gleichen Düsenstäbe oder Düsen wie zum Aufbringen der Zinnschicht verwendet werden können. Zweckmäßig werden diese Düsen beheizt.

Damit erhält das Flußmittel die richtige Viskosität.

Es wurde ausgeführt, daß die Vorrichtung auch zum Anlöten von Bauteilen an die Leiterbahnen oder Lötaugen der Leiterplatten verwendet werden soll. Hierzu ist es zweckmäßig, daß die Düsen um ihre Längsachsen dreh-bar sind. Für den gleichen Zweck ist weiter eine Ausführungsform vorgesehen, bei der die Düsen nur an einer Säule befestigt sind, diese um ihre vertikale Achse schwenkbar und hierzu mit einem Schwenkmechanismus verbunden ist.

Einer der letzten Schritte bei der industriellen Leiterplattenverarbeitung besteht in dem elektrischen Verbinden der Anschlüsse der Bauteile mit den Leiterbahnen und Lötaugen der Leiterplatten, dem sogenannten Verlöten. Hierzu sind maschinelle Lötverfahren bekannt. Häufig angewandte Verfahren sind das Schlepp-Lötverfahren und das Wellenlötverfahren. Beim Schlepplöten wird die Leiterplatte über die Oberfläche des flüssigen Lots gezogen oder geschleppt. Dabei berührt das Lot die miteinander zu verlötenden Teile und zusätzlich die gesamte Unterseite der Leiterplatte. Bei Wellenlötverfahren wird das flüssige Lot mit einer Pumpe in eine Düse hineingedrückt. Deren Austrittsöffnung liegt über dem Niveau des Lots in der Wanne. Aus der Düse tritt das flüssige Lot in Form einer Welle aus und strömt in die Wanne zurück. Mit ihrer Unterseite wird die Leiterplatte über diese Lötwelle geführt. Die miteinander zu verbindenden Teile nehmen Lot an und werden verbunden. Zusätzlich wird auf ihr die gesamte Unterseite der Leiterplatte vom Lot berührt. Bei beiden Verfahren stehen die Unterseiten der Leiterplatten über eine größere Fläche mit dem heißen Lot in Berührung. Dadurch werden die Leiterplatten und auch die Bauteile aufgewärmt und thermisch belastet. Bei empfindlichen Bauteilen verursacht dies große Schwierigkeiten. Bei-den bekannten Verfahren ist weiter gemeinsam, daß die Wanne eine große, vom flüssigen Lot eingenommene freie Oberfläche aufweist. Aus Flußmittelresten, Verunreinigungen und anderen Stoffen bilden sich hier heiße Dämpfe und Gase. Diese verunreinigen, da sie nur schwer abgefangen werden können, die Umgebung.

Gemäß der vorliegenden Erfindung soll die eingangs erläuterte Vorrichtung zum Verlöten der Anschlüsse von Bauteilen mit den Leiterbahnen und Lötaugen von auf einer oder auf beiden Seiten mit den Bauteilen bestückten Leiterplatte verwendet werden. Dabei soll das flüssige Lot nur an die zu verlötenden Stellen der Leiterplatten gelangen. Gemäß der Erfindung wird diese Aufgabe in überraschend einfacher Weise dadurch gelöst, daß das flüssige Lot gegen die Unterseite der Leiterplatten gespritzt wird. Zweckmäßig wird das flüssige Lot beim Vorbeilauf einer zu verlötenden Stelle taktweise gegen die Unterseite gespritzt. Während das flüssige heiße Lot beim Wellenlötverfahren die Unterseite der Leiterplatte - in Transportrichtung gesehen - auf einer Länge von etwa 10 cm berührt und die Unterseite der Leiterplatte beim Schlepplötverfahren auf ihrer gesamten Länge mit dem heißen Lot in Berührung steht, beschränkt sich die Berührung beim erfindungsgemäßen Verfahren auf eine Länge von nur etwa 1 cm. Das Lot trifft als Strahl auf die Unterseite der Leiterplatte auf. In deren Transportrichtung hat er eine Länge von einem oder nur wenigen mm. Nach dem Auftreffen auf die Leiterplatte zerteilt er sich nach beiden Seiten, fließt oder kriecht wenige mm unter der Leiterplatte, worauf überschüssiges Lot nach unten abtropft. Damit beschränkt sich die Berührung auf eine Gesamtlänge von nur etwa 10 mm. Die sich hieraus ergebende thermische Belastung der Leiterplatte und der Bauteile ist vernachlässigbar gering. Damit können auch empfindlichere Bauteile maschinell mit der Leiterplatte verlötet werden. Erfindungsgemäß kann das Lot an verschiedenen Stellen unter verschiedenen Winkeln gegen die Unterseite der Leiterplatte gespritzt werden. Damit lassen sich auch SMD-Bauteile (surface mounted devices) maschinell anlöten. Hierbei handelt es sich um größere Bauteile, die mit einer gesamten Seite an der Leiterplatte anliegen und deren Enden teilweise metallisiert sind. Erfindungsgemäß läßt sich das Lot als Strahl genau auf die Berührungslinie zwischen der Leiterplatte bzw. einer Leiterbahn und der Metallisierung des Bauteiles richten. Damit wird das Lot nur dort aufgetragen, wo es benötigt wird. Damit wird die thermische Belastung vernachlässigbar klein.

Das Spritzen ist eine mechanisch leicht zu beherrschende Maßnahme. Die Menge des Lots, Zeitpunkt, Zeitdauer, Stärke, Winkel usw. können genau gesteuert werden. Damit entfällt die Notwendigkeit, die Leiterplatte mit ihrer gesamten Fläche mit dem flüssigen Lot in Berührung zu bringen, obwohl nur an einigen Stellen Lot erforderlich ist. Im Vergleich zu den bekannten Lötverfahren sinkt damit die Menge des umzupumpenden Lots, die zu dessen Aufheizen erforderliche Energie usw. Weiter entfällt, daß das heiße Lot auf der gesamten Oberfläche der Wanne mit Luft in Berührung steht und Dämpfe, Gase usw. auf dieser großen Oberfläche in die Umgebungsluft übergehen. Ebenso sinkt, wie ausgeführt, die thermische Belastung der Leiterplatte und der Bauteile.

Im Horizontalschnitt sind diese Bauteile im allgemeinen rechteckförmig oder quadratisch. Häufig werden sie so auf die Leiterplatten aufgesetzt, daß ihre Kanten parallel zu den Kanten der Leiterplatte verlaufen. Ein parallel zu der sich hieraus ergebenden Berührungslinie zwischen der Leiterplatte bzw. ei-nerLeiterbahn und der Metallisierung des Bauteiles gespritzter Strahl aus flüssigem Lot trifft genau auf diese Berührungslinie auf. Dort wird dann die Metallisierung des Bauteiles an die Leiterbahn angelötet. Es kommt jedoch auch vor, daß die SMD-Bauteile unter einem Winkel auf die Leiterplatte aufgesetzt werden. Dann schneidet der Lot-Strahl die Berührungslinie unter einem spitzen Winkel. Die Metallisierung des Bauteiles wird nur noch punktförmig mit der Leiterbahn verbunden. Es bilden sich tote Flächen. Gemäß der Erfindung soll das Anlötverfahren so ausgebildet werden, daß auch dann, wenn die Berührungslinien zwischen der Metallisierung und der Leiterplatte unter einem spitzen Winkel zu deren Bewegungsrichtung verlaufen, die Metallisierung entlang ihrer gesamten Berührungslinie mit einer Leiterbahn mit dieser verlötet wird. Die Lösung für diese Aufgabe ergibt sich nach der Erfindung dadurch, daß das flüssige Lot unter einem sich gegenüber der Bewegungsrichtung der Leiterplatten periodisch ändernden Winkel gegen deren Unterseiten gespritzt wird. DAbei sollte sich der Winkel periodisch in einem Bereich von etwa -45° bis etwa +45° ändern, wobei die Null-Grad-Linie unter 90° zur Bewegungsrichtung der Leiterplatten verläuft. Zweckmäßig ändert sich der Winkel mit einer Periodenzahl von etwa 5 bis etwa 20 Schwingungen pro Minute. Bei einem solchen sich um eine Vertikalachse hin- und herbewegenden Spritz-Strahl trifft dieser periodisch immer aus einer anderen Richtung auf die Unterseite einer Leiterplatte und damit die Berührungslinie zwischen der Metallisierung eines Bauteiles und einer Leiterbahn auf. Damit ist sichergestellt, daß auch unter einem spitzen Winkel zu der Bewegungsrichtung der Leiterplatten verlaufende Berührungslinien auf ihrer gesamten Länge vom Spritz-Strahl erfaßt werden. Damit tritt die gewünschte vollständige Verlötung zwischen Metallisierung und Leiterbahn ein.

Am Beispiel der in der Zeichnung gezeigten Ausführungsformen wird die ERfindung nun weiter beschrieben. In der Zeichnung ist:

Fig. 1     eine perspektivische Teilansicht einer Leiterplatte,

Fig. 2     ein Teil-Querschnitt durch die Leiterplatte mit Darstellung des in Fig. 1 innerhalb des Kreises II liegenden Gebietes,

Fig. 3     eine Darstellung ähnlich Fig. 2 nach Einsetzen und Anlöten eines elektrischen Bauelementes,

Fig. 4     eine vereinfachte perspektivische Darstellung einer Heißverzinnungs-Anlage mit den verschiedenen Stationen zum Behandeln der Leiterplatten,

Fig. 5     eine Ansicht von einer Stirnseite, teilweise im Schnitt, auf die erfindungsgemäße Vorrichtung,

Fig. 6     eine Teilseitenansicht, teilweise im Schnitt, in Blickrichtung der Linie VI - VI in Fig. 5,

Fig. 7     in größerem Maßstab ein Querschnitt durch die beiden ober- und unterhalb der Transportbahn der Leiterplatten angeordneten Düsenstäbe,

Fig. 8     eine Teilansicht, teilweise im Schnitt, in Blickrichtung der Linie VIII - VIII in Fig. 7,

Fig. 9     eine Teilansicht einer Transportwalze mit Darstellung des durch diese durchtretenden Kühlmittelkanales,

Fig.10     eine vereinfachte schematische Darstellung einer Station zum Fluxen,

Fig.11     in vergrößertem Maßstab ein Teilschnitt durch eine Leiterplatte nach dem Durchlauf durch die in Fig. 10 gezeigte Station,

Fig.12     eine vereinfachte schematische Darstellung der Vorrichtung beim Anlöten von Bauteilen,

Fig.13     eine schematische Seitenansicht, teilweise im Schnitt, entlang der Schnittlinie XIII - XIII in Fig. 12,

Fig.14     ein Schnitt entlang der Schnittlinie XIV - XIV in Fig. 12, mit Darstellung von in dieser Figur nicht gezeigten Teilen,

Fig.15     in größerem Maßstab ein Schnitt entlang der Schnittlinie XV - XV in Fig. 14 und

Fig.16     eine Darstellung wie in Fig. 12, jedoch mit schematischer Darstellung der Verschwenkbarkeit der Säule.

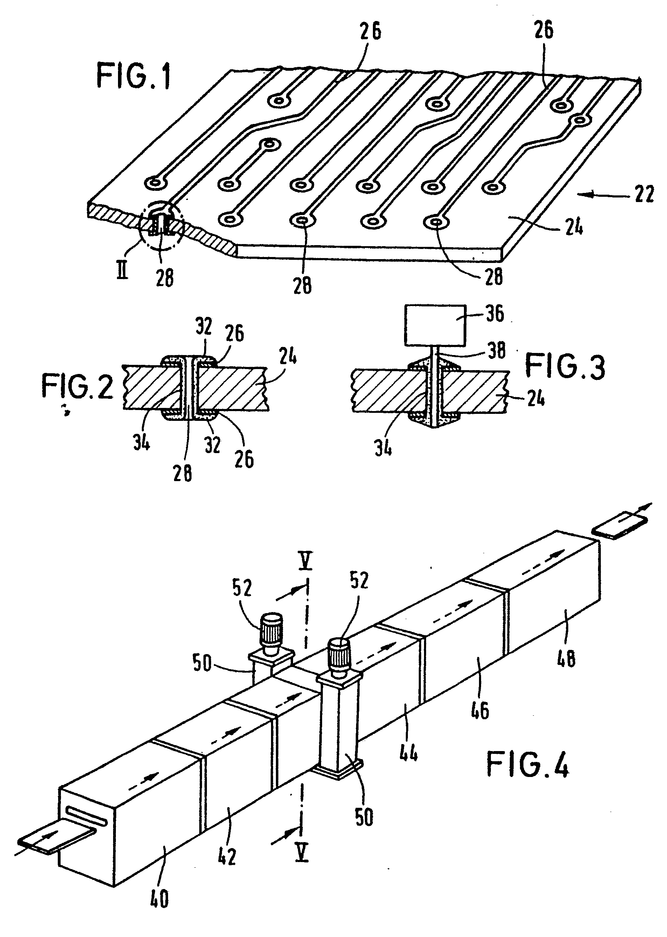

Fig. 1 zeigt allgemein eine Leiterplatte 22. Sie besteht im wesentlichen aus dem Basismaterial 24 und den auf dieses aufgebrachten Kupfer-Leiterbahnen 26. Diese wurden in einem nicht zur Erfindung gehörenden Verfahren aufgebracht. Mit dem hier geschilderten Heißverzinnungsverfahren sollen die Kupfer-Leiterbahnen verzinnt werden. Im allgemeinen befinden sie sich, wie die vergrößerte Darstellung in Fig. 2 zeigt, auf der Ober- und auch auf der Unterseite des Basismaterials 24. Durch dieses treten Löcher 28 durch. Nach der Darstellung in Fig. 2 weisen auch die Wände der Löcher 28 einen Kupferauftrag auf. Auch dieser wird mit dem erfindungsgemäßen Heißverzinnungsverfahren verzinnt. Dabei ergibt sich an der Wand des Loches 28 die verlötfähige Durchkontaktierung 34. In diese wird nach der Darstellung in Fig. 3 ein Bauelement 36 mit seinem Anschlußstift 38 eingesetzt. Der Zinnauftrag erleichtert in einem späteren Arbeitsgang das Anlöten des Anschlußstiftes 38. Fig. 4 zeigt schematisch die verschiedenen Stationen, die eine Leiterplatte beim Heißverzinnen durchläuft. Im einzelnen sind dies die Station 40 zum Heizen, die Station 42 zum Fluxen, die den eigentlichen Gegenstand der Erfindung bildende Station 44 zum Heißverzinnen und Nivellieren, die Station 46 zum Reinigen und die Station 48 zum Trocknen der Leiterplatten.Auf den beiden Seiten der Station 44 befinden sich die beiden Säulen 50. Auf diese sind Motore 52 aufgesetzt.

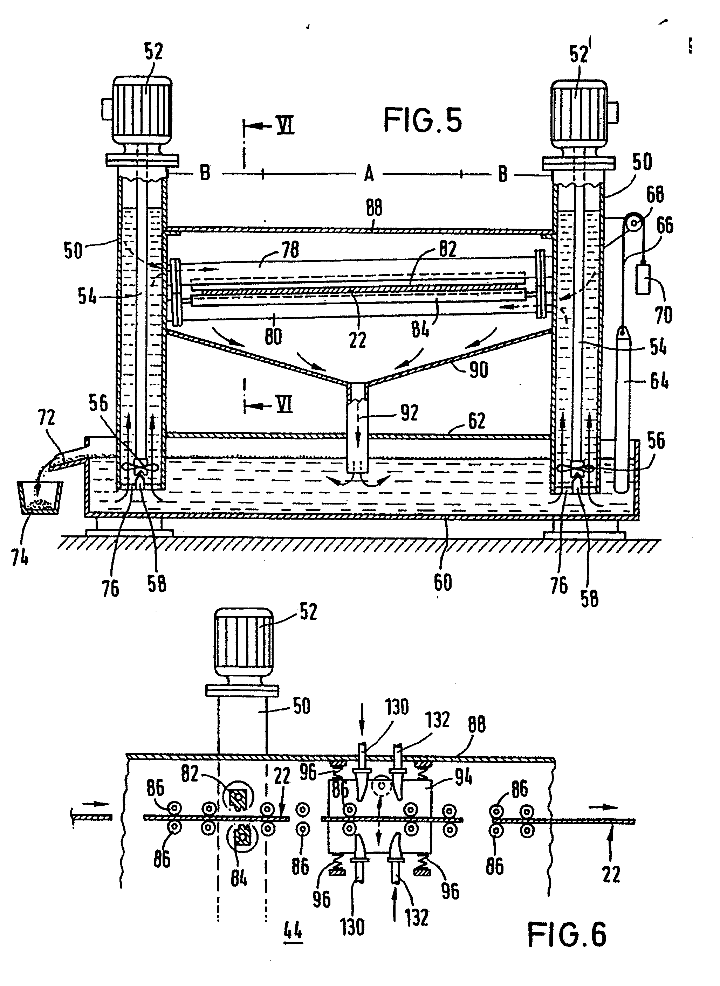

Gemäß der Darstellung in Fig. 5 treiben die Motore 52 Wellen 54 an. Diese verlaufen in den Säulen 50 und tragen ihrerseits Pumpenräder 56. Die Wellen 54 sind auf Lagern 58 gelagert. Die gesamte Heißverzinnungsvorrichtung steht in einer Wanne 60. Diese wird in Fig. 5 schematisch gezeigt. Sie ist mit schmelzflüssigem Zinn gefüllt. Hierzu wird Zinn mit hier nicht gezeigten Heizeinrichtungen aufgeschmolzen und in schmelzflüssigem Zustand gehalten. Eine Deckelplatte 62 schließt die Wanne 60 nach oben ab. Sie verhindert den Eintritt von Verunreinigungen und vermindert die Unfallgefahr. An einer Stelle, an der die Deckelplatte 62 ausgespart ist, ragt ein Zinnknüppel 64 in die Wanne 60 hinein. Er hängt an einem Seil 66. Dieses läuft über eine Umlenkrolle 68. Ein Gewicht 70 gleicht das Gewicht des Zinnknüppels 64 aus. Mit hier nicht gezeigten Fühlern und Stelleinrichtungen wird der Zinnknüppel 64 immer so weit in die Wanne 60 abgesenkt, daß der Füllstand in der Wanne annähernd gleich bleibt. In ihrem oberen Bereich weist die Wanne 60 noch ein Überlaufrohr 72 auf. Unter diesem befindet sich ein Sammelbehälter 74. Die Säulen 50 sind an ihren unteren Enden offen und weisen dort Einlauföffnungen 76 auf. Über diese wird, wie die Pfeile in Fig. 5 zeigen, das schmelzflüssige Zinn aus der Wanne 60 durch die Pumpenräder 56 in den Säulen 50 nach oben gepumpt. Die beiden Säulen 50 sind über Zuführungsrohre 78 und 80 miteinander verbunden. In diese tritt das schmelzflüssige Zinn in Richtung der eingezeichneten Pfeile ein. Von den Zuführungsrohren 78 und 80 gelangt das Zinn in die Düsenst äbe 82 und 84. Diese befinden sich, wie Fig. 5 zeigt, über und unter der Transportbahn der Leiterplatten 22. Ebenso über und unter der Transportbahn befinden sich die in Fig. 6 eingezeichneten Transportwalzen 86. Die Vorrichtung wird nach oben durch eine Deckelplatte 88 abgeschlossen. Unter der Transportbahn befindet sich der trichterförmige Boden 90. An seiner in der Mitte gelegenen tiefsten Stelle weist er ein oder mehrere Ablaufrohre 92 auf. Über diese fließt das überschüssige Zinn in die Wanne 60 zurück. Fig. 6 zeigt noch die in der gleichen Station befindliche erfindungsgemäße Rüttelvorrichtung 94. Sie ist in Federn 96 gelagert. Über eine hier nicht gezeigte Unwucht wird sie in Schwingungen versetzt. Diese werden auf die in ihr befindlichen Transportwalzen 86 und durch diese auf die gerade durchlaufende Leiterplatte 22 übertragen. Hier befinden sich auch die Einrichtungen zum Nivellieren des Zinnauftrages.

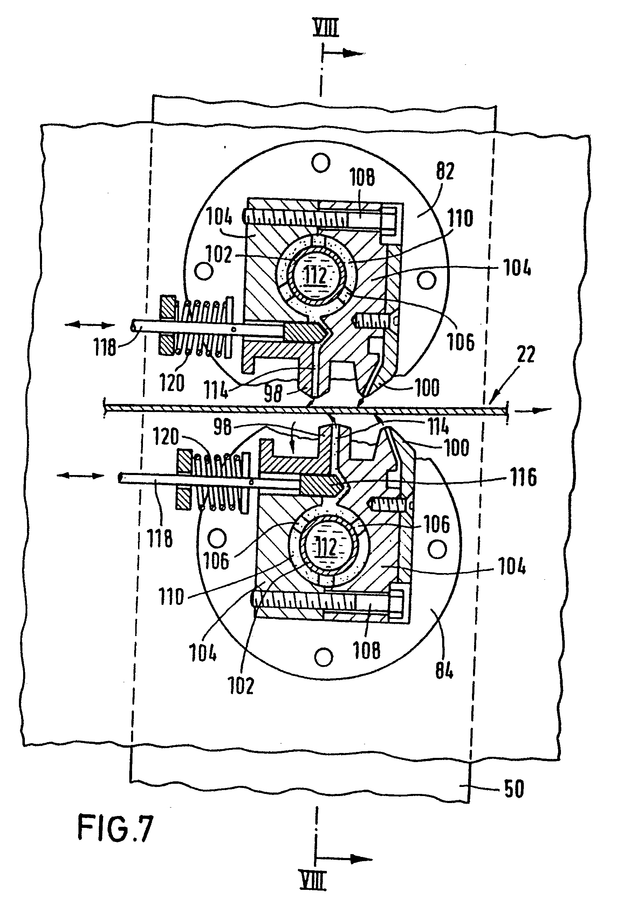

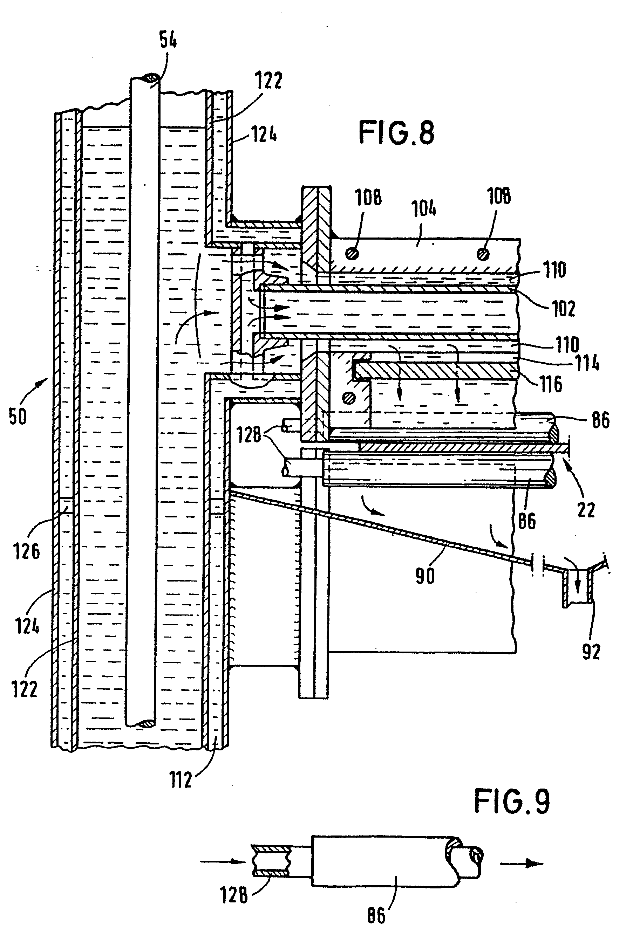

Fig. 7 zeigt nun den Aufbau der Düsenstäbe,und Fig. 8 zeigt deren Anschluß an den Zinn- und den Heißölkreislauf. Beide Düsenstäbe 82 und 84 weisen je zwei Austrittsöffnungen 98 und 100 auf. Durch die Austrittsöffnungen 98 tritt Zinn und durch die Austrittsöffnungen 100 tritt heiße Luft aus. Rohre 102 treten durch beide Düsenstäbe 82 und 84 durch. Beide Düsenstäbe bestehen im wesentlichen aus je zwei Halbschalen 104. Auf ihren sich gegenüberliegenden Innenseiten sind sie halbkreisförmig ausgespart. Sie weisen dort Stützen 106 zum Abstützen der Rohre 102 auf. Bolzen 108 halten die beiden Halbschalen 104 zusammen. Die auf ihrer Innenseite ausgesparten Halbschalen 104 umschließen einen Ringraum 110. Über diesen wird das heiße Zinn zugeführt. Die Rohre 102 dagegen liegen im Kreislauf des Heißöles 112. Aus dem Ringraum 110 tritt das heiße Zinn in die Zuleitungen 114 und von dort in die Austrittsöffnungen 98 ein. Schieber 116 liegen in den Zuleitungen 114. Diese Schieber 116 werden an Stangen 118 geführt. Diese sind mit nicht gezeigten Elektromagneten verbunden. Federn 120 greifen an den Stangen 118 an und sind so angeordnet, daß sie die Schieber 116 in eine Schließstellung drücken.

Gemäß der Darstellung in Fig. 8 werden die Säulen 50 durch ein Innenrohr 122 und ein dieses umschließendes Außenrohr 124 gebildet. Beide Rohre sind durch Stützen 126 miteinander verbunden. DAs Innenrohr 122 liegt im Kreislauf des heißen Zinns. Der Ringraum zwischen dem Innen- und dem Außenrohr 122 bzw. 124 liegt im Kreislauf des Heißöls 112. In Richtung der eingezeichneten Pfeile tritt das heiße Zinn aus dem Innenrohr 122 in den Ringraum 110 und von dort in die Zuleitung 114 ein. In dieser liegt der Schieber 116. Das Heißöl 112 tritt aus dem Ringraum zwischen dem Innenrohr 122 und dem Außenrohr 124 in das Rohr 102 ein. Dadurch werden beide Düsenstäbe 82 und 84 und damit auch das Zinn auf der gesamten Breite der Vorrichtung gleichförmig auf Temperatur gehalten.

Gemäß der Darstellung in Fig. 9 sitzen die Transportwalzen 86 aufHohlwellen 128. Diese Hohlwellen 128 liegen in einem Kühlmittelkreislauf.

Fig. 6 zeigt schematisch die Rüttelvorrichtung 94 und die bereits erwähnten Einrichtungen zum Nivellieren des Zinnauftrages. Bei diesen handelt es sich im wesentlichen um sich gegenüberliegende und von oben und unten auf die Transportbahn gerichtete Düsen 130 und 132. In der Bewegungsrichtung der Leiterplatten 22 liegen die Düsen 130 vor den Düsen 132. Die Düsen 130 sind mit ihren Austrittsöffnungen etwas gegen die Richtung und die Düsen 132 sind mit ihren Austrittsöffnungen etwas in Bewegungsrichtung der Leiterplatten 22 abgebogen. Durch die Düsen 130 wird unter Druck heißes und durch die Düsen 132 kühleres Öl oder Luft ausgestoßen. Das heiße Öl hat eine Temperatur von etwa 220° und das kühlere Öl eine Temperatur von etwa 150° bis 160°. Mit dem heißen Öl wird der noch formbare Zinnauftrag vergleichmäßigt oder nivelliert. Mit dem aus den Düsen 132 ausgedrückten kühleren Öl oder aus diesen Düsen ausgedrückter Luft wird der Zinnauftrag abgekühlt und damit verfestigt. Damit wird verhindert, daß sich in der Oberfläche des Zinns beim anschließenden Durchlauf durch die Transportwalzen 86 Riefen bilden.Die Zahl der Düsen ist nicht auf die gezeigte Zahl von vier Düsen beschränkt. Es können mehr, selten weniger Düsen verwendet werden.. Auch sind Ausführungsformen möglich, bei denen aus mehr als einem Düsenpaar Öl und aus einem weiteren Düsenpaar Luft ausgestoßen wird. Bei sämtlichen Ausführungsformen sollte das Öl nicht stetig, sondern nur bei Durchlauf einer Leiterplatte zugeführt werden. Hierzu liegen in den Zuleitungen zu den Düsen zum Beispiel Magnetventile, die mit in der Transportbahn der Leiterplatten liegenden Fühlern gesteuert werden.

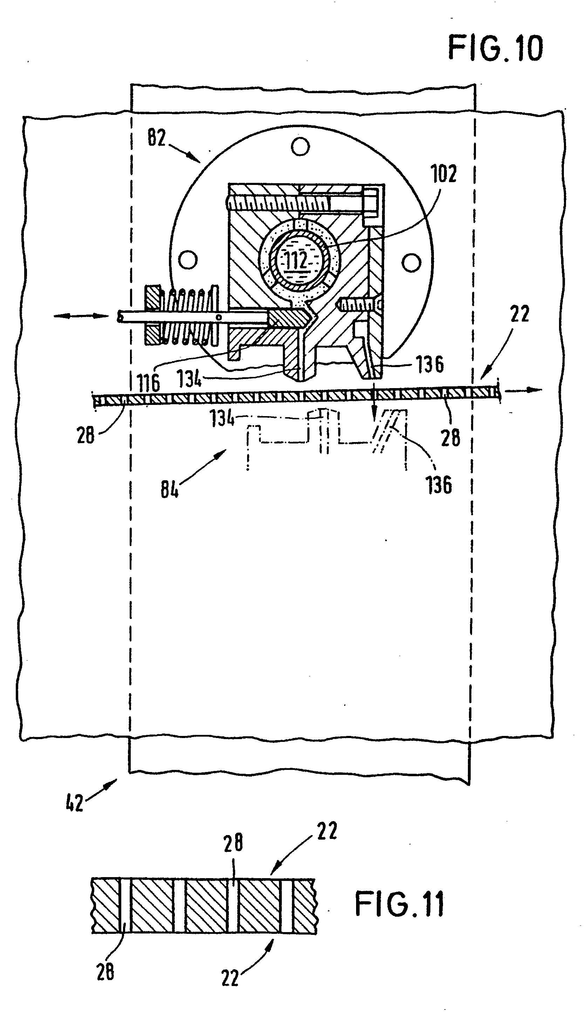

In Fig. 4 wurde die Fluxstation 42 zum Aufbringen des Flußmittels schematisch dargestellt. Gemäß der Darstellung in Fig. 10 weist sie hierzu Düsenstäbe 82 und 84 auf, wie diese bereits zum Aufbringen des Zinns beschrieben wurden. Die Düsenstäbe weisen jetzt Austrittsöffnungen 134 für das Flußmittel und Austrittsöffnungen 136 für Druckluft auf. Das Flußmittel wird mit dem durch das Rohr 102 durchtretenden Heißöl 112 erwärmt. Die Zufuhr des Flußmittels wird mit dem Schieber 116 gesteuert. Bei geöffnetem Schieber tritt das Flußmittel unter Druck aus den Austrittsöffnungen 134 aus und benetzt die Leiterplatten 22 auf deren Unter- und Oberseite gleichmäßig. Was die Löcher 28 betrifft, so werden nicht nur deren Wände benetzt, sondern die Löcher werden zum Teil vollständig mit Flußmittel gefüllt. Fig. 11 zeigt dieses Bild. Damit würde ein Übermaß an Flußmittel in die Station 42 und das Zinnbad mitgenommen. Um dies zu vermeiden, werden die Platten 22 mit der aus den Austrittsöffnungen 136 austretenden Druckluft abgeblasen. Dadurch werden die Löcher 28 frei.

Nach dieser Beschreibung der einzelnen Stationen kann der Durchlauf der Leiterplatten 22 durch die gesamte Vorrichtung beschrieben werden. Die Leiterplatten 22 durchlaufen nacheinander die in Fig. 4 gezeigten Stationen zum Heizen, Fluxen, Verzinnen und Nivellieren, Reinigen und Trocknen. Der Durchlauf durch die Fluxstation 42 wird in Fig. 10 gezeigt. Hier werden die Leiterplatten 22 auf ihrer Ober- und ihrer Unterseite mit Flußmittel benetzt. Das die Löcher 28 anfangs voll ausfüllende Flußmittel wird mit der aus den Austrittsöffnungen 136 austretenden Druckluft weggeblasen.

Anschließend durchlaufen die Leiterplatten die Station 44 zum Verzinnen und Nivellieren. Diese wird in den Figuren 5, 6, 7 und 8 gezeigt. Dabei wird das schmelzflüssige Zinn aus der Wanne 60 in den Säulen 50 hochgepumpt. Aus diesen tritt es unter der Einwirkung der Schwerkraft und damit mit einem konstanten statischen Druck in die Ringräume 110 ein. Der Durchlauf einer Leiterplatte 22 wird mit einem Fühler erkannt. Darauf werden die Schieber 116 in Öffnungsstellung gezogen. Das Zinn tritt aus den Austrittsöffnungen 98 aus und setzt sich auf die Kupferleiterbahnen auf beiden Seiten der Leiterplatte 22 auf. Mit der aus den Austrittsöffnungen 100 austretenden Druckluft tritt eine erste Nivellierung oder Vergleichmäßigung des Zinnauftrages ein. Mit dem durch die Rohre 102 durchlaufenden Heißöl werden sowohl das Zinn als auch die Luft auf Temperatur gehalten. Überschüssiges Zinn läuft zur Seite und nach hinten ab und tropft nach unten. Dieses Ablaufen zur Seite wird durch die in Fig. 5 gezeigte Schräglage begünstigt. Das Ablaufen nach hinten wird durch die in Fig. 7 gezeigte Neigung begünstigt. Die Transportbahn der Leiterplatten 22 verläuft nicht horizontal, sondern etwas aufwärts. Das ablaufende Zinn tropft auf den trichterförmigen Boden 90, tritt in das Ablaufrohr 92 ein und gelangt aus diesem wieder in die Wanne 60. In dieser schwimmen Flußmittelreste und andere Verunreinigungen nach oben. Sie gelangen in das Überlaufrohr 72 und von dort in den Sammelbehälter 74. Die in Fig. 5 gezeigten Düsenstäbe 82 und 84 sind in Fig. 6 links eingezeichnet. Nach dem Durchlauf durch diese wird die Leiterplatte 22 in die Rüttelvorrichtung 94 vorgeschoben. Diese wird durch nicht gezeigte Einrichtungen gerüttelt oder in Schwingungen versetzt. In die Löcher 28 eingedrungenes Zinn wird dadurch entfernt. Durch das aus den Düsen 130 unter Druck austretende heiße Öl wird der Zinnauftrag vergleichmäßigt. Erhabene Stellen und dergleichen werden abgebaut. Durch die aus den Düsen 132 austretende kältere Luft wird der Zinnauftrag abgekühlt. Dabei wird er so hart, daß die Transportwalzen 86 beim weiteren Durchlauf keine Vertiefungen, Riefen usw. im Zinnauftrag hinterlassen. Anstelle von zwei Düsen 130 bzw. 132 können auch mehr Düsen angewendet werden. Ebenso kann auch ein Düsenpaar weggelassen werden.

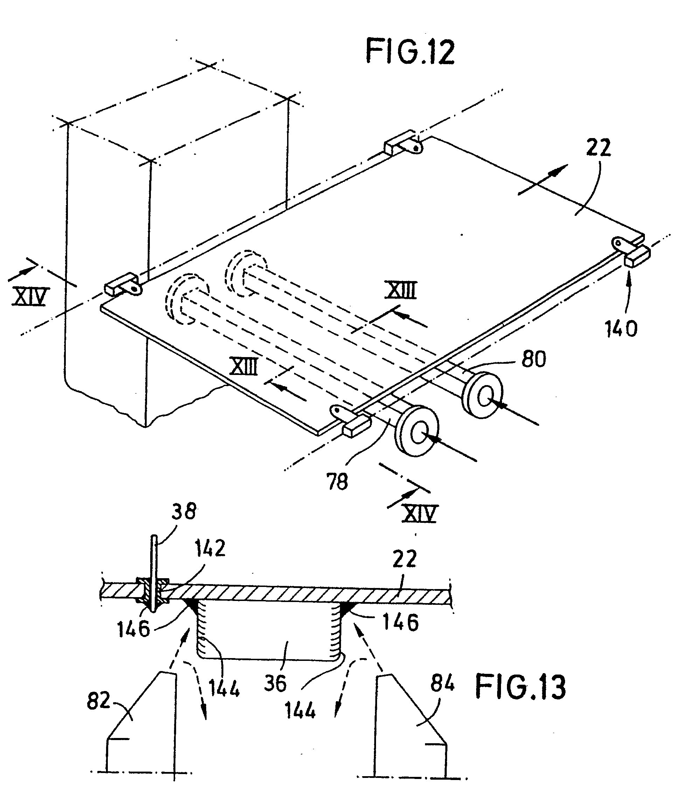

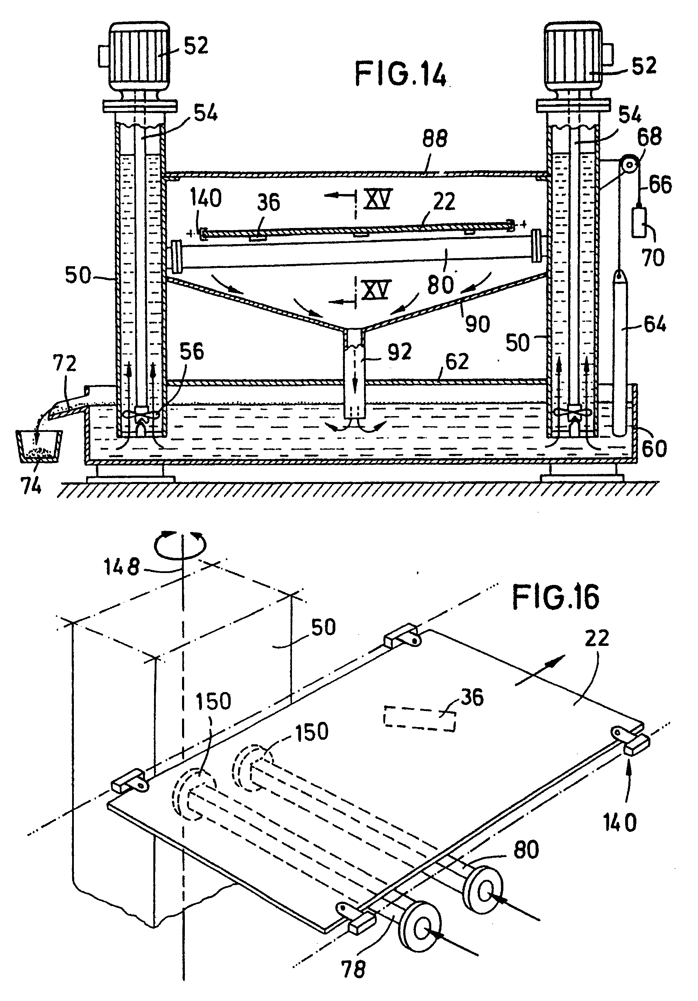

Unter Bezug auf die Figuren 12 bis 16 wird nun erläutert, wie mit der vorstehend beschriebenen Vorrichtung Bauteile an die Leiterbahnen und Lötaugen von Leiterplatten angelötet werden. Die Figuren 12 und 13 zeigen eine Leiterplatte 22. Gemäß der Darstellung in Fig. 17 wird diese mit einer schematisch dargestellten Transporteinrichtung 140 in Richtung des eingezeichneten Pfeiles weiterbewegt. Fig. 13 zeigt ein Lötauge 142. Durch dieses ist der Anschlußstift 38 eines nicht dargestellten Bauteiles durchgeführt. Dieses Bauteil befindet sich auf der Oberseite der Leiterplatte 22. Auf deren Unterseite befindet sich ein weiteres Bauteil (SMD) 36. Dieses weist metallische Kappen 144 auf, die die elektrischen Anschlüsse darstellen. Zwei Düsen 82, 84 sind unterhalb der Transportbahn der Leiterplatten 22 mit gegenseitigem Abstand angeordnet. Gemäß den in Fig. 13 schematisch eingezeichneten Pfeilen tritt das flüssige Lot aus diesen in Form eines Strahles aus, der sich über die gesamte Breite der Leiterplatten 22 erstreckt. Dieser Strahl trifft auf die Lötaugen 142 und die Kappen 144 auf. Dort bildet er die Lötstellen oder Verlötungen 146 aus. Wie erläutert, tritt dieser Strahl taktweise nur bei Vorbeilauf einer zu verlötenden Stelle aus den Düsen aus.

Die in Fig. 14 gezeigte Ausführungsform weist die Wanne 60 auf, in der das Lot geschmolzen wird. Säulen 50 tauchen in die Wanne 60 ein. Auf den Säulen stehen Motore 52 auf. Über Wellen 54 treiben diese die Pumpenräder 56 an. Diese drücken das flüssige Lot in den Säulen 50 nach oben. Der Deckel 62 schließt die Wanne 60 nach oben ab. Auf dem Lot aufschwimmende Verunreinigungen, was durch die Pünktchen angedeutet wird, fließen über das Überlaufrohr 72 in den Sammelbehälter 74 ab. Ein Zinnknüppel 64 ist an einem Seil 66 aufgehangen. Dieses ist über eine Umlenkrolle 68 geführt und mit einem Gegengewicht 70 verbunden. Nach Maßgabe des verbrauchten Lots wird der Zinnknüppel 64 nachgeführt und schmilzt an seinem unteren Ende ab. Die Deckelplatte 88 deckt das Ganze nach oben ab. Der trichterförmige Boden 90 fängt abtropfendes Lot auf. Über das Ablaufrohr 92 strömt dies in die Wanne 60 zurück.

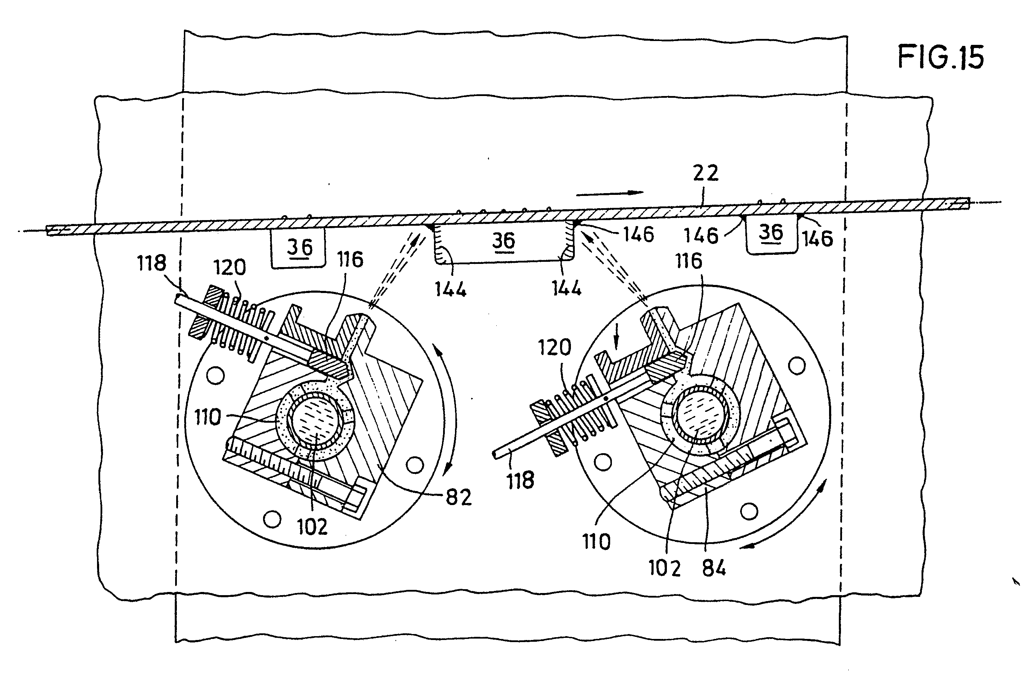

Gemäß der Darstellung in Fig. 15 weisen die beiden Düsen 82, 84 Austrittsöffnungen auf. Aus diesen tritt das flüssige Lot in Form eines breiten Strahles aus. Schieber 116 ragen in die Zuleitungen zu den Austrittsöffnungen hinein. Sie sitzen an den Stangen 118. Federn 120 drücken die Schieber 116 in Schließstellung. Über einen Ringraum 110 wird das flüssige Lot zugeführt. Diese Ringräume 110 sind mit den Säulen 50 verbunden. Zentrisch in den Düsen verlaufen die Rohre 112. Sie liegen in einem Heizmittelkreislauf. Dadurch wird das flüssige Lot auf Temperatur gehalten.

Fig. 15 läßt erkennen, daß das heiße Lot nur als Strahl an der Berührungslinie zwischen der Unterseite der Leiterplatte 22 und den Enden des unter dieser befindlichen Bauteils (SMD) 36 auftrifft. Nur an dieser sammelt sich Lot unter Bildung der Verlötungen 146 an. Hier werden die metallischen Kappen 144 des Bauteils 36 mit einer im einzelnen nicht gezeigten Leiterbahn verbunden. Damit entfällt die bisher gefürchtete thermische Belastung des Bauteils. Gemäß den in Fig. 15 eingezeichneten Pfeilen können die beiden Düsen 82 und 84 in beiden Richtungen um ihre Längsachse gedreht werden. Damit läßt sich der Winkel, unter dem der Lotstrahl auf die Leiterplatte auftrifft, einstellen. Es ist auch denkbar, daß die Schieber 116 der beiden Düsen 82 und 84 zu verschiedenen Zeitpunkten geöffnet werden. Man wird dies dann vornehmen, wenn die Länge des Bauteils 36 - in Transportrichtung der Leiterplatte 22 gesehen - in einem solchen Verhältnis zu dem Abstand zwischen den beiden Düsen 82 und 84 steht, daß bei einer gleichzeitigen Betätigung der beiden Düsen die Lotstrahle zu lang werden oder die Auftreffwinkel ungünstig sind. So liegen die Verhältnisse schon ganz anders, wenn statt des in der Mitte von Fig. 15 eingezeichneten großen Bauteils 36 die beiden an den Enden befindlichen kleinen Bauteile 36 angelötet werden sollen.

Die Figur 16 zeigt wieder eine Leiterplatte 22. Sie wird mit einer schematisch dargestellten Transporteinrichtung 140 in Richtung des eingezeichneten Pfeiles weiterbewegt. Im übrigen entspricht die Darstellung der von Fig. 12, die erläutert wurde. Die beiden Zuführungsrohre 78, 80, die die Düsen tragen, sind mit Halterungen 150 an der Säule 50 befestigt. Diese Halterungen 150 sind so ausgebildet, daß sowohl flüssiges Lot in die Düsen eintreten und auch ein Heizmittel in diesen umgewälzt werden kann. Das flüssige Lot und das Heizmittel werden aus der Säule 50 zugeführt. Fig. 16 zeigt noch ein Bauteil 36, dessen Kanten unter einem von 90° abweichenden Winkel zu der Bewegungsrichtung der Leiterplatte 22 verlaufen. Im Betrieb schwingt nun die Säule 50 und damit die an ihr befestigten Führungsroher 78, 80 mit den Düsen um die schematisch eingezeichnete Vertikalachse 148. Hierzu greift eine nicht dargestellte mechanische Vorrichtung an der Säule 50 an. Sie schwenkt die Säule 50 um deren Vertikalachse 148 bis zu etwa maximal 45° in jeder Richtung. Diese Hin- und Herbewegung erfolgt mit einer Häufigkeit von etwa fünf bis etwa zwanzig Schwingungen pro Minute. Damit trifft der Lotstrahl unter einem veränderlichen Winkel auf die Berührungslinie zwischen der Metallisierung des Bauteils 20 und einer Leiterbahn auf. Zu einem bestimmten Zeitaugenblick liegt Parallelität vor. Damit wird die Berührungslinie auf ihrer gesamten Länge vom Lotstrahl erfaßt. Dadurch entsteht eine vollständige Verlötung. Außerhalb der Berührungslinie auftreffendes Lot tropft ab und/oder wird beim weiteren Lauf der Leiterplatte 22 abgeschüttelt.

**Ansprüche**

1. Vorrichtung zum kontinuierlichen Heißverzinnen von Leiterplatten mit einer Station zum Heizen, einer Station zum Fluxen, einer Station zum Heißverzinnen, einer Station zum Reinigen und einer Station zum Trocknen der Leiterplatten, mit unter- und oberhalb von deren Transportbahn horizontal angeordneten und die Leiterplatten erfassenden Transportwalzen, mit einer Wanne an der Station zum Heißverzinnen zur Aufnahme des schmelzflüssigen Zinns, mit mindestens einer Düse zum Aufbringen des Zinns auf die Kupferleiterbahnen, mit einer Leitung zwischen der Wanne und der Düse, wobei die Leitung über die Ebene der Düse nach oben hinausgeht, mit einer Pumpe zum Fördern des Zinns aus der Wanne durch die Leitung in die Düse und mit Heizvorrichtungen für das Zinn in der Wanne, dadurch gekennzeichnet, daß Säulen (50) auf beiden Seiten der Transportbahn in der Wanne (60) angeordnet sind, mit ihren unteren offenen Enden tief in diese eintauchen und mit ihren oberen Enden oberhalb der Transportbahn der Leiterplatten (22) liegen, Düsen (82, 84) oberhalb und unterhalb der Transportbahn beidseits dieser angeordnet, auf diese ausgerichtet und mit ihren Einläufen in der Ebene der Transportbahn mit den Säulen (50) verbunden sind.

2. Vorrichtung nach Anspruch 1, dadurch gekennzeichnet, daß die Düsen (82, 84) als über die gesamte Breite der Transportbahn verlaufende Düsenstäbe ausgebildet sind, die Düsenstäbe zentrisch ein Rohr (102) und dieses umschließend einen Ringraum (110) aufweisen, die Säulen (50) zwei sich konzentrisch umschließende Rohre (122, 124) aufweisen, die inneren Rohre (122) mit ihren unteren Enden offen sind, in die Wanne (60) eintauchen und die Ringräume (110) an sie angeschlossen sind, während der Raum zwischen den beiden Rohren (122, 124) mit einem Einlaufende an eine Heißölquelle angeschlossen und andererseits mit den zentrischen Rohren (102) verbunden ist.

3. Vorrichtung nach Anspruch 1 und 2, dadurch gekennzeichnet, daß die Düsen (82, 84) in der Bewegungsrichtung der Leiterplatten (22) abwärts der Austrittsöffnungen (98) für das Zinn Austrittsöffnungen (100) für Heißluft aufweisen.

4. Vorrichtung nach Anspruch 1 bis 3, dadurch gekennzeichnet, daß die Düsen (82, 84) in den Zuleitungen (114) zu den Austrittsöffnungen (98) für das Zinn einen Schieber (116) aufweisen, dieser durch den Druck einer Feder (120) in die Zuleitung (114) in eine diese verschließende Stellung und über einen Magneten aus dieser Heraus in eine diese freigebende Stellung verschiebbar ist.

5. Vorrichtung nach Anspruch 1 bis 4, dadurch gekennzeichnet, daß die Düsen (82, 84) zwei Halbschalen (104) aufweisen, die Halbschalen (104) durch Bolzen (108) zusammengehalten sind und auf ihren sich gegenüberliegenden Seiten zur Ausbildung der Ringräume (110) ausgespart sind.

6. Vorrichtung nach Anspruch 1 bis 5, dadurch gekennzeichnet, daß die Düsen (82, 84) um ihre Längsachsen beziehungsweise gegenüber der Transportbahn der Leiterplatten (22) verstellbar sind.

7. Vorrichtung nach Anspruch 1 bis 5, dadurch gekennzeichnet, daß die Düsen (82, 84) über ihrer Länge in mehrere Abschnitte (B, A, B) unterteilt sind.

8. Vorrichtung nach Anspruch 7, dadurch gekennzeichnet, daß die Düsen (82, 84) in einen mittleren breiten Bereich (A) und zwei äußere schmale Bereiche (B) unterteilt sind und die Schieber (116) zum Steuern der Zufuhr des Zinns und die Steuerungen für die Heißluft für Jeden Bereich getrennt betätigbar sind.

9. Vorrichtung nach Anspruch 1 bis 8, dadurch gekennzeichnet, daß die Transportwalzen (86) zum Transport der Leiterplatten (22) Hohlwellen (128) aufweisen und diese in einem Kühlmittelkreislauf liegen.

10. Vorrichtung nach Anspruch 1 bis 9, dadurch gekennzeichnet, daß die Transportwalzen (86), die Düsen (82, 84) usw. in ihrer Neigung quer zur Transportbahn der Leiterplatten (22) verstellbar sind.

11. Vorrichtung nach Anspruch 1 bis 10, dadurch gekennzeichnet, daß die Transportwalzen (86) entlang der Transportbahn der Leiterplatten (22) unter einer geringen Neigung angeordnet sind.

12. Vorrichtung nach Anspruch 1 bis 11, dadruch gekennzeichnet, daß die Säulen (50) in der Wanne (60) und die Düsen (82, 84) zwischen den Säulen (50) gehalten sind, unterhalb der Düsen (82, 84) ein ein Gefälle aufweisender Boden (90) angeordnet ist und von dessen tiefster Stelle ein Ablaufrohr (92) in die Wanne (60) führt und der Raum oberhalb der Transportbahn und die Wanne (60) jeweils durch Deckelplatten (88 bzw. 62) abgedeckt sind.

13. Vorrichtung nach Anspruch 12, dadurch gekennzeichnet, daß der Boden (90) trichterförmig ausgebildet ist und seine tiefste Stelle in der Mitte aufweist.

14. Vorrichtung nach Anspruch 1 bis 13, dadurch gekennzeichnet, daß auf jeder Säule (50) ein Elektromotor (52) angeordnet und in jeder Säule (50) eine Welle (54) gelagert ist, das obere Ende jeder Welle (54) an einen Elektromotor (52) angekuppelt und am unteren Ende jeder Welle (54) ein Pumpenrad (56) befestigt ist.

15. Vorrichtung nach Anspruch 1 bis 14, dadurch gekennzeichnet, daß ein Zinnknüppel (64) höhenverschiebbar aufgehangen ist und mit seinem unteren Ende in die Wanne (60) eintaucht.

16. Vorrichtung nach Anspruch 1 bis 15, dadurch gekennzeichnet, daß in der Station (46) zum Reinigen der Leiterplatten (22) die Transportwalzen (86) federnd aufgehangen und an eine Rüttelvorrichtung (94) angeschlossen sind.

17. Vorrichtung nach Anspruch 16, dadurch gekennzeichnet, daß die Rüttelvorrichtung (94) in Federn (96) gelagert und die Transportwalzen (86) in ihr gehalten sind.

18. Vorrichtung nach Anspruch 1 bis 17, dadurch gekennzeichnet, daß in der Station (42) zum Fluxen nach den Auftragsvorrichtungen für das Flußmittel oberhalb und unterhalb der Transportbahn der Leiterplatten (22) auf diese ausgerichtete Düsen (136) zum Freiblasen von deren Löchern (28) vorgesehen sind.

19. Vorrichtung nach Anspruch 2 bis 18, dadurch gekennzeichnet, daß in der Bewegungsrichtung der Leiterplatten (22) nach den Düsen (82, 84) zum Aufbringen des Zinns ober- und unterhalb der Transportbahn Düsen (130) zum Aufspritzen von heißem Öl und Düsen (132) zum Aufblasen von eine niedrigere Temperatur aufweisender Luft vorgesehen sind.

20. Vorrichtung nach Anspruch 19, dadurch gekennzeichnet, daß die Düsen (130, 132) in der Rüttelvorrichtung angeordnet sind.

21. Vorrichtung nach Anspruch 19 und 20, dadurch gekennzeichnet, daß die Düsen (130, 132) intermittierend nur bei Durchlauf einer Leiterplatte (22) mit Öl und/oder Luft gespeist werden.

22. Vorrichtung nach Anspruch 19 bis 21, dadurch gekennzeichnet, daß mehr als ein Paar Düsen (130 und/oder 132) vorgesehen ist.

23. Vorrichtung nach Anspruch 22, dadurch gekennzeichnet, daß in der Station (42) zum Fluxen Düsen (82, 84) mit Austrittsöffnungen (134) für Flußmittel und Austrittsöffnungen (136) für Luft vorgesehen sind und die Düsen (82, 84) beheizt sind.

24. Vorrichtung nach den Ansprüchen 1 bis 23, dadurch gekennzeichnet, daß die Düsen (82, 84) um ihre Längsachsen drehbar sind.

25. Vorrichtung nach Anspruch 1 bis 24, dadurch gekennzeichnet, daß eine Säule (32) um ihre vertikale Achse schwenkbar und mit einem Schwenkmechanismus verbunden ist.

26. Verfahren zum Verlöten der Anschlüsse von Bauteilen mit den Leiterbahnen und Lötaugen von auf einer oder auf beiden Seiten mit den Bauteilen bestückten Leiterplatten, wozu Lot in einer Wanne geschmolzen, die Leiterplatten über die Wanne geführt und das flüssige Lot dabei mit der Unterseite der Leiterplatten unter Verlöten der Anschlüsse in Berührung gebracht wird, unter Verwendung der Vorrichtung nach den Ansprüchen 1 bis 25, dadurch gekennzeichnet, daß das flüssige Lot gegen die Unterseite der Leiterplatten gespritzt wird.

27. Verfahren nach Anspruch 26, dadurch gekennzeichnet, daß das flüssige Lot bei Vorbeilauf einer zu verlötenden Stelle taktweise gegen die Unterseite gespritzt wird.

28. Verfahren nach Anspruch 26 und 27, dadurch gekennzeichnet, daß das flüssige Lot unter verschiedenen Winkeln gegen die Unterseite gespritzt wird.

29. Vorfahren nach Anspruch 26 bis 28, dadurch gekennzeichnet, daß das flüssige Lot unter einem sich gegenüber der Bewegungsrichtung der Leiterplatten periodisch ändernden Winkel gegen deren Unterseiten gespritzt wird.

30. Verfahren nach Anspruch 29, dadurch gekennzeichnet, daß sich der Winkel periodisch in einem Bereich von etwa -45° bis etwa +45° ändert, wobei die Null-Grad-Linie unter 90° zur Bewegungsrichtung der Leiterplatten verläuft.

31. Verfahren nach Anspruch 29 und 30, dadurch gekennzeichnet, daß sich der Winkel mit einer Periodenzahl von 5 bis 20 Schwingungen pro Minute ändert.

## Claims

1. Apparatus for the continuous hot tinning of printed circuit boards comprising a heating station, a fluxing station, a hot tinning station, a cleaning station and a station for drying the printed circuit boards, comprising transport rollers which are arranged horizontally below and above the path of transportation of the printed circuit boards and which engage the printed circuit boards, a bath at the hot tinning station for receiving the molten tin, at least one nozzle for applying the tin to the copper conductor tracks, a conduit between the bath and the nozzle, the conduit extending upwardly beyond the plane of the nozzle, a pump for conveying the tin out of the bath through the conduit into the nozzle, and heating devices for the tin in the bath, characterized in that columns (50) are arranged on both sides of the transportation path in the bath (60), dip deep into the bath with their lower open ends and lie with their upper ends above the transportation path of the printed circuit boards (22), and nozzles (82, 84) are arranged above and beneath the transportation path on both sides thereof and are directed on to same and are connected with their inlets in the plane of the transportation path to the columns (50).

2. Apparatus according to claim 1, characterized in that the nozzles (82, 84) are in the form of nozzle bars which extend over the entire width of the transportation path, the nozzle bars centrally have a tube (102) and around same an annular space (110), the columns (50) have two tubes (122, 124) which concentrically enclose each other, the inner tubes (122) are open with their lower ends and dip into the bath (60) and the annular spaces (110) are connected to same, while the space between the two tubes (122, 124) is connected by an inlet end to a hot oil source and connected on the other hand to the central tubes (102).

3. Apparatus according to claim 1 and claim 2, characterized in that the nozzles (82, 84) have discharge openings (100) for hot air downstream of the discharge openings (98) for the tin, in the direction of movement of the printed circuit boards (22).

4. Apparatus according to claims 1 to 3, characterized in that the nozzles (82, 84) have a slider (116) in the feed conduits (114) leading to the discharge nozzles (98) for the tin, and said slider (116) is displaceable by the pressure of a spring (120) into the feed conduit (114) into a position of closing same and by a magnet means out of said feed conduit into a position of opening same.

5. Apparatus according to claims 1 to 4, characterized in that the nozzles (82, 84) have two half-shell portions (104), and the half-shell portions (104) are held together by bolts (108) and are recessed on their mutually oppositely disposed sides to form the annular spaces (110).

6. Apparatus according to claims 1 to 5, characterized in that the nozzles (82, 84) are adjustable about their longitudinal axes and relative to the transportation path of the printed circuit boards (22) respectively.

7. Apparatus according to claims 1 to 5, characterized in that the nozzles (82, 84) are divided over their length into a plurality of portions (B, A, B).

8. Apparatus according to claim 7, characterized in that the nozzles (82, 84) are divided into a central wide region (A) and two outer narrow regions (B) and the sliders (116) for controlling the feed of tin and the controls for the hot air are actuable separately for each region.

9. Apparatus according to claims 1 to 8, characterized in that the transport rollers (86) for transportation of the printed circuit boards (22) have hollow shafts (128) and that they are disposed in a coolant circuit.

10. Apparatus according to claims 1 to 9, characterized in that the transport rollers (86), the nozzles (82, 84) etc. are adjustable in respect of their inclination transversely with respect to the transportation path of the printed circuit boards (22).

11. Apparatus according to claims 1 to 10, characterized in that the transport rollers (86) are arranged at a slight inclination along the transportation path of the printed circuit boards (22).

12. Apparatus according to claims 1 to 11, characterized in that the columns (50) are held in the bath (60) and the nozzles (82, 84) are held between the columns (50), a bottom (90) having a fall is disposed beneath the nozzles (82, 84) and a drain tube (92) leads into the bath (60) from the lowest part of said bottom (90) and the spaces above the transportation path and the bath (60) are covered by respective cover plates (88, 62 respectively).

13. Apparatus according to claim 12, characterized in that the bottom (90) is of a funnel-like configuration and has its lowest part at the centre.

14. Apparatus according to claims 1 to 13, characterized in that an electric motor (52) is arranged on each column (50) and mounted in each column (50) is a shaft (54), the upper end of each shaft (54) is coupled to an electric motor (52) and a pump wheel (56) is fixed to the lower end of each shaft (54).

15. Apparatus according to claims 1 to 14, characterized in that a tin billet (64) is suspended in such a way as to be displaceable in respect of height and dips with its lower end into the bath (60).

16. Apparatus according to claims 1 to 15, characterized in that the transport rollers (86) are resiliently suspended in the station (46) for cleaning of the printed circuit boards (22) and are connected to a shaker apparatus (94).

17. Apparatus according to claim 16, characterized in that the shaker apparatus (94) is mounted on springs (96) and the transport rollers (86) are held in said shaker apparatus.

18. Apparatus according to claims 1 to 17, characterized in that provided in the fluxing station (42) after the applicator apparatuses for the fluxing agent above and below the transportation path of the printed circuit boareds (22) are nozzles (136) which are directed on to same for blowing free the holes (28) therein.

19. Apparatus according to claims 2 to 18, characterized in that provided in the direction of movement of the printed circuit boards (22) downstrean of the nozzles (82, 84) for applying the tin and above and below the transportation path are nozzles (130) for spraying on hot oil and nozzles (132) for blowing on air which is at a lower temperature.

20. Apparatus according to claim 19, characterized in that the nozzles (130, 132) are disposed in the shaker apparatus.

21. Apparatus according to claims 19 and 20, characterized in that the nozzles (130, 132) are intermittently supplied with oil and/or air only when a printed circuit board (22) passes through.

22. Apparatus according to claims 19 to 21, characterized in that there is provided more than one pair of nozzles (130 and/or 132).

23. Apparatus according to claim 22, characterized in that provided in the fluxing station (42) are nozzles (82, 84) with discharge openings (134) for fluxing agent and discharge openings (136) for air, and the nozzles (82, 84) are heated.

24. Apparatus according to claims 1 to 23, characterized in that the nozzles (82, 84) are rotatable about their longitudinal axes.

25. Apparatus according to claims 1 to 24, characterized in that a column (32) is pivotable about its vertical axis and is connected to a pivoting mechanism.

26. Method of soldering the terminals of components to the conducting tracks and soldering eyes of printed circuit boards which are fitted with the components on one or both wides, for which purpose solder is melted in a bath, the printed circuit boards are passed over the bath and in that operation the liquid solder is brought into contact with the underside of the printed circuit boards, with soldering of the terminals, using the apparatus according to claims 1 to 25, characterized in that the liquid solder is sprayed against the underside of the printed circuit boards.

27. Method according to claim 26, characterized in that the liquid solder is cyclically sprayed against the underside as a location to be soldered moves past.

28. Method according to claim 26 and claim 27, characterized in that the liquid solder is sprayed against the underside at different angles.

29. Method according to claims 26 to 28, characterized in that the liquid solder is sprayed against the undersides of the printed circuit boards at an angle which changes periodically relative to the direction of movement of the printed circuit boards.

30. Method according to claim 29, characterized in that the angle periodically changes in a range of from about -45° to about +45°, wherein the zero degree line extends at 90° relative to the direction of movement of the printed circuit boards.

31. Method according to claim 29 and claim 30, characterized in that the angle changes at a frequency of from 5 to 20 oscillations per minute.

**Revendications**

1. Dispositif pour étamer à chaud en continu des plaquettes à circuits imprimés, comportant un poste pour chauffer, un poste pour fluxer, un poste pour étamer à chaud, un poste pour nettoyer et un poste pour sécher les plaquettes à circuits imprimés, des rouleaux transporteurs disposés horizontalement en dessous et au-dessus de leur trajet de transport et saisissant les plaquettes à circuits imprimés, une cuve dans le poste pour étamer à chaud, destinée à recevoir l'étain en fusion, au moins un ajutage pour appliquer l'étain sur les pistes conductrices en cuivre, une conduite entre la cuve et l'ajutage, cette conduite s'étendant vers le haut au-delà du plan de l'ajutage, une pompe pour refouler l'étain de la cuve par la conduite dans l'ajutage, et des dispositifs de chauffage pour l'étain dans la cuve, caractérisé en ce que des colonnes (50) sont disposées dans la cuve (60), de part et d'autre du trajet de transport, leurs extrémités inférieures ouvertes étant profondément plongées dans cette cuve et leurs extrémités supérieures étant disposées au-dessus du trajet de transport des plaquettes à circuits imprimés (22), des ajutages (82, 84) étant disposés au-dessus et en dessous du trajet de transport, de part et d'autre de celui-ci, étant orientés sur celui-ci et étant raccordés aux colonnes (50) par leurs entrées dans le plan du trajet de transport.

2. Dispositif suivant la revendication 1, caractérisé en ce que les ajutages (82, 84) ont la forme de barres à ajutages s'étendant sur toute la largeur du trajet de transport, ces barres à ajutages comportant, en leur centre, un tube (102) et une chambre annulaire (110) entourant ce tube, les colonnes (50) comportant deux tubes (122, 124) concentriques, les tubes intérieurs (122) étant ouverts à leurs extrémités inférieures, étant plongés dans la cuve (60) et étant raccordés aux chambres annulaires (110), tandis que l'espace situé entre les deux tubes (122, 124) est raccordé, d'une part, par une extrémité d'entrée à une source d'huile chauffée et, d'autre part, aux tubes centraux (102).

3. Dispositif suivant les revendications 1 et 2, caractérisé en ce que les ajutages (82, 84) présentent, dans le sens de déplacement des plaquettes à circuits imprimés (22), en aval des orifices de sortie (98) pour l'étain, des orifices de sortie (100) pour de l'air chaud.

4. Dispositif suivant l'une quelconque des revendications 1 à 3, caractérisé en ce que les ajutages (82, 84) comportent, dans les conduits d'alimentation (114) aboutissant aux orifices de sortie (98) pour l'étain, un obturateur (116) qui, sous la pression d'un ressort (120), peut être déplacé dans une position d'obturation du conduit d'alimentation et, par l'intermédiaire d'un aimant, peut être écarté de cette position vers une position de libération de ce conduit.

5. Dispositif suivant l'une quelconque des revendications 1 à 4, caractérisé en ce que les ajutages (82, 84) comportent deux demi-coquilles (104), ces demi-coquilles (104) étant assemblées par des boulons (108) et présentant des évidements dans leurs faces opposées pour former les chambres annulaires (110).

6. Dispositif suivant l'une quelconque des revendications 1 à 5, caractérisé en ce que les ajutages (82, 84) peuvent être déplacés autour de leurs axes longitudinaux par rapport au trajet de transport des plaquettes à circuits imprimés (22).

7. Dispositif suivant l'une quelconque des revendications 1 à 5, caractérisé en ce que les ajutages (82, 84) sont divisés en plusieurs segments (B, A, B) dans le sens de leur longueur.

8. Dispositif suivant la revendication 7, caractérisé en ce que les ajutages (82, 84) sont divisés en une large zone médiane (A) et deux zones extérieures étroites (B), tandis que les obturateurs (116) pour la commande de l'alimentation en étain et les commandes pour l'air chaud peuvent être actionnés séparément pour chaque zone.

9. Dispositif suivant l'une quelconque des revendications 1 à 8, caractérisé en ce que les rouleaux transporteurs (86) comportent, pour le transport des plaquettes à circuits imprimés (22), des arbres creux (128) qui sont disposés dans un circuit d'agent de refroidissement.

10. Dispositif suivant l'une quelconque des revendications 1 à 9, caractérisé en ce que les rouleaux transporteurs (86), les ajutages (82, 84), etc., peuvent être réglés au plan de leur inclinaison transversale au trajet de transport des plaquettes à circuits imprimés (22).

11. Dispositif suivant l'une quelconque des revendications 1 à 10, caractérisé en ce que les rouleaux transporteurs (86) sont disposés le long du trajet de transport des plaquettes à circuits imprimés (22) et sous une faible inclinaison.

12. Dispositif suivant l'une quelconque des revendications 1 à 11, caractérisé en ce que les colonnes (50) sont maintenues dans la cuve (60), les ajutages (82, 84) sont maintenus entre les colonnes (50), et en dessous des ajutages (82, 84) est disposé un fond (90) qui présente une déclivité et de l'endroit le plus profond duquel part un tube de décharge (92) qui s'ouvre dans la cuve (60) et la chambre située au-dessus du trajet de transport ainsi que la cuve (60) sont chacune couvertes par une plaque formant couvercle (88, 62).

13. Dispositif suivant la revendication 12, caractérisé en ce que le fond (90) a la forme d'un entonnoir dont l'endroit le plus profond est situé en son centre.

14. Dispositif suivant l'une quelconque des revendications 1 à 13, caractérisé en ce que, sur chaque colonne (50), est monté un moteur électrique (52) et dans chaque colonne (50) est installé un arbre rotatif (54), l'extrémité supérieure de chaque arbre (54) étant accouplée à un moteur électrique (52) et un rotor de pompe (56) étant fixé à l'extrémité inférieure de chaque arbre.

15. Dispositif suivant l'une quelconque des revendications 1 à 14, caractérisé en ce qu'une billette d'étain (64) est suspendue d'une manière déplaçable en hauteur et est plongée dans la cuve (60) par son extrémité inférieure.

16. Dispositif suivant l'une quelconque des revendications 1 à 15, caractérisé en ce que, dans le poste (46) pour le nettoyage des plaquettes à circuits imprimés (22), sont suspendus élastiquement les rouleaux transporteurs (86) qui sont reliés à un dispositif vibrateur (94).

17. Dispositif suivant la revendication 16, caractérisé en ce que le dispositif vibrateur (94) est monté sur les ressorts (96) et contient les rouleaux transporteurs (86).

18. Dispositif suivant l'une quelconque des revendications 1 à 17, caractérisé en ce que, dans le poste (42) destiné au fluxage sont prévus, en aval des dispositifs applicateurs de flux, au-dessus et en dessous du trajet de transport des plaquettes à circuits imprimés (22), des ajutages orientés vers les plaquettes en vue du dégagement par soufflage de leurs perforations (28).

19. Dispositif suivant l'une quelconque des revendications 2 à 18, caractérisé en ce que, dans le sens de déplacement des plaquettes à circuits imprimés (22), sont prévus, en aval des ajutages (82, 84) destinés à l'application de l'étain, en dessous et au-dessus du trajet de transport, des ajutages (130) destinés à la pulvérisation d'huile chaude et des ajutages (132) destinés au soufflage d'air à température inférieure.

20. Dispositif suivant la revendication 19, caractérisé en ce que les ajutages (130, 132) sont disposés dans le dispositif vibrateur.

21. Dispositif suivant les revendications 19 et 20, caractérisé en ce que les ajutages (130, 132) sont alimentés de manière intermittente en huile et/ou en air uniquement lors du passage d'une plaquette à circuits imprimés (22).

22. Dispositif suivant l'une quelconque des revendications 19 à 21, caractérisé en ce que plus d'une paire d'ajutages (130 et/ou 132) est prévue.

23. Dispositif suivant la revendication 22, caractérisé en ce que dans le poste (42) pour le fluxage sont prévus des ajutages (82, 84) qui présentent des orifices de sortie (134) pour le flux et des orifices de sortie pour l'air, ces ajutages (82, 84) étant chauffés.

24. Dispositif suivant l'une quelconque des revendications 1 à 23, caractérisé en ce que les ajutages (82, 84) peuvent tourner autour de leurs axes longitudinaux.

25. Dispositif suivant l'une quelconque des revendications 1 à 24, caractérisé en ce qu'une colonne (32) peut pivoter autour de son axe vertical et est reliée à un mécanisme de pivotement.

26. Dispositif pour le brasage des connexions des composants aux pistes conductrices et aux oeillets des plaquettes à circuits imprimés garnies de composants sur l'une ou les deux faces, le métal à braser étant fondu dans une cuve, les plaquettes à circuits imprimés étant amenées au-dessus de la cuve et le métal à braser fondu étant mis en contact avec la face inférieure des plaquettes à circuits imprimés lors du brasage des connexions, à l'aide du dispositif suivant l'une quelconque des revendications 1 à 25, caractérisé en ce que le métal à braser fondu est pulvérisé sur la face inférieure des plaquettes à circuits imprimés.

27. Procédé suivant la revendication 26, caractérisé en ce que le métal à braser fondu est pulvérisé sur la face inférieure par impulsions, au passage d'un endroit à braser.

28. Procédé suivant les revendications 26 et 27, caractérisé en ce que le métal à braser fondu est pulvérisé sur la face inférieure sous divers angles.

29. Procédé suivant l'une quelconque des revendications 26 à 28, caractérisé en ce que le métal à braser fondu est pulvérisé sur les faces inférieures des plaquettes à circuits imprimés sous un angle variant périodiquement par rapport à leur sens de déplacement.

30. Procédé suivant la revendication 29, caractérisé en ce que l'angle varie périodiquement dans un intervalle allant de -45° à environ +45°, l'axe de 0° étant perpendiculaire au sens de déplacement des plaquettes à circuits imprimés.

31. Procédé suivant les revendications 29 et 30, caractérisé en ce que l'angle varie selon un nombre de périodes de 5 à 20 oscillations par minute.

FIG.1

FIG.2

FIG.3

FIG.4

FIG.5

FIG.6

FIG.7

FIG.8

FIG.9

# FIG.10

# FIG.11

# FIG.12

# FIG.13

FIG.14

FIG.16

FIG.15

EP 0 219 059 B1